**Europäisches Patentamt**

**European Patent Office**

**Office européen des brevets**

(11) Veröffentlichungsnummer: **0 238 890 B1**

## (12) EUROPÄISCHE PATENTSCHRIFT

(45) Veröffentlichungstag der Patentschrift:
02.01.91 Patentblatt 91/01

(21) Anmeldenummer: 87102879.1

(22) Anmeldetag: 28.02.87

(51) Int. Cl.⁵: **C08G 18/10,** C08G 18/65,
C09J 175/04, C09K 3/10

(54) Mehrkomponenten Kleb- und Dichtstoffe auf Polyurethanbasis mit einstellbarer Topfzeit.

(30) Priorität: 08.03.86 DE 3607718

(43) Veröffentlichungstag der Anmeldung:
30.09.87 Patentblatt 87/40

(45) Bekanntmachung des Hinweises auf die
Patenterteilung:
02.01.91 Patentblatt 91/01

(84) Benannte Vertragsstaaten:
AT BE CH DE ES FR GB IT LI NL

(56) Entgegenhaltungen:
US-A- 3 714 127
US-A- 4 546 166

(73) Patentinhaber: Teroson GmbH
Hans-Bunte-Strasse 4
D-6900 Heidelberg 1 (DE)

(72) Erfinder: Scheubel, Georg
Schwetzinger Strasse 78
D-6900 Heidelberg (DE)

(74) Vertreter: UEXKÜLL & STOLBERG
Patentanwälte
Beselerstrasse 4
D-2000 Hamburg 52 (DE)

## Beschreibung

Die Erfindung betrifft die Verwendung bestimmter Mehrkomponenten systeme auf Polyurethanbasis als Kleb- und Dichtstoffe mit einstellbarer Topfzeit

Mehrkomponenten Kleb- und Dichtstoffe auf Polyurethanbasis sind im Stand der Technik bekannt. Derartige Polymermassen werden unmittelbar vor dem Verbrauch durch Mischen der Polyol- und Polyisocyanat-Komponenten angesetzt und bleiben während einer bestimmten Zeitspanne, der "Topfzeit", verarbeitbar.

Erfindungsgemäß ist die Topfzeit definiert als die Zeitspanne zwischen dem Ansetzen von 50g des Endproduktes bis zum Erreichen einer Viskosität von 800 Pa·s bei 20°C.

Abhängig vom beabsichtigten Verwendungszweck des Kleb-oder Dichtstoffes sind unterschiedliche Topfzeiten erforderlich. So werden beispielsweise bei der Serienverarbeitung mit kurzer Aufeinanderfolge der einzelnen Arbeitsgänge Klebstoffe mit kurzen Topfzeiten benötigt, die sich problemlos und zuverlässig ansetzen lassen.

Bei den bisher bekannten 2-K-Systemen wurde die Topfzeit durch Zugeben von Katalysatoren unterschiedlicher Art in unterschiedlicher Menge variiert; ein Verfahren, das sich in mehrfacher Hinsicht als nachteilig erwiesen hat. Einerseits muß der Hersteller eine Vielzahl unterschiedlich eingestellter Komponentensysteme bereithalten, die jeweils nicht genügende Umsätze erzielen können, um wirtschaftlich rentabel zu sein, andererseits benötigt der Verbraucher häufig eine noch größere Flexibilität der Topfzeit und wird im übrigen von den unvermeidlichen Schwankungen der Topfzeit getroffen, die beispielsweise durch Temperaturschwankungen hervorgerufen werden.

Aufgabe der Erfindung ist es demgemäß, Mehrkomponenten Kleb- und Dichtstoffe auf Polyurethanbasis zu schaffen, deren Topfzeit innerhalb eines vorgegebenen Rahmens beliebig einstellbar ist und bei denen Temperatur- und/oder Produktionsschwankungen ohne großen Aufwand auch vom Verbraucher korrigiert werden können.

Zur Lösung der Aufgabe wird erfindungsgemäß die Verwendung von Mehrkomponenten-Systemen gemäß Anspruch 1 vorgeschlagen, die gekennzeichnet sind durch

1. eine reine Polyolkomponente I mit langer Topfzeit (1 bis 8 Stunder),
2. eine Polyolkomponente II mit kurzer Topfzeit (1 bis 30 Minuten), die einen Gehalt an Aminohydroxyverbindungen aufweist und
3. ein Vorpolymeres mit freien Isocyanatgruppen.

Die erfindungsgemäße Verwendung von zwei Polyolkomponenten mit unterschiedlicher Topfzeit ermöglicht es, durch einfaches Mischen der Komponenten in unterschiedlichen Mengenverhältnissen die Topfzeit beliebig einzustellen; die Topfzeit der Polyolkomponente II wird durch Zugeben einer Aminohydroxyverbindung auf wenige Minuten verkürzt.

Aminohydroxyverbindungen sind bereits bei der Herstellung von Polyurethanmassen verwendet worden. So beschreibt die DE-AS 22 38 305 ein Klebstoffsystem auf Polyurethanbasis, bei dem ein Teil der Hydroxygruppen durch primäre Amingruppen ersetzt ist, um die Viskosität der fertigen Klebstoffmischung zu erhöhen. Die DE-AS 15 95 784 beschreibt die Verwendung von Aminohydroxyverbindungen als Mittel zur Kettenverlängerung bei der Herstellung einer Lösung linearer Polyurethane und die DE-OS 31 41 887 lehrt die Verwendung von Lewis-Basen wie beispielsweise Dimethylethanolamin als Co-Katalysatoren bei der Herstellung eines Polyurethanpräpolymeren.

Die Aminohydroxyverbindungen dienen jedoch in keinem der bekannten Fälle zur Steuerung der Topfzeit, sondern es wird zu diesem Zweck die Verwendung von Katalysatoren bzw. Inhibitoren in unterschiedlicher Konzentration vorgeschlagen.

Demgegenüber wird erfindungsgemäß auf den Zusatz von Katalysatoren vollständig verzichtet und die Topfzeit ausschließlich durch das Mischungsverhältnis der Polyolkomponenten I und II bestimmt, wobei sich eine lineare Abhängigkeit der Topfzeit von dem Mischungsverhältnis ergibt, wenn die gegebenenfalls gebildete Wärme abgeführt wird. Dünne Filme geben die Wärme in ausreichendem Maße an die Umgebung ab, während beispielsweise bei Viskositätsmessungen zur Bestimmung der Topfzeit gekühlt werden muß.

Als Polyolkomponenten eignen sich grundsätzlich alle üblicherweise für die Herstellung von festen Polyurethanmassen verwendeten Polyole und Gemische derselben, insbesondere Polyether und Polyester sowie Rizinusöl mit Hydroxylzahlen von 40 bis 400. Die Auswahl kann weitgehend nach technischen Gesichtspunkten unter Berücksichtigung der Anforderungen an das Endprodukt, wie beispielsweise Endhärte, Elastizität, Haftung auf bestimmten Untergründen, Wasserbeständigkeit, Quellverhalten oder Brandverhalten getroffen werden. Viskosität und Fließverhalten können ferner in einem weiten Bereich noch durch Zugabe von Füllstoffen und Trockenmitteln variiert werden. Die Topfzeit einer auf diese Weise compoundierten Polyolkomponente I kann auf 1 bis 8 Studen eingestellt werden.

Der Polyolanteil der Polyolkomponente II kann seiner Natur nach mit der Polyolkomponente I übereinstimmen oder anders zusammengesetzt sein. Vorzugsweise beträgt die Hydroxylzahl der Polyolkomponente II ebenfalls 40 bis 400. Die Polyolkomponente II enthält eine Aminohydroxyverbindung in einer Menge von vorzugweise etwa 1 Amin-Aquivalent : 5 Hydroxyl-Aquivalenten, und ihre Topfzeit beträg nur 1 bis 30 Minuten.

Erfindungsgemäß können als Aminohydroxyverbindungen praktisch alle handelsüblichen Aminoalkohole oder Gemische derselben verwendet werden, die bei Raumtemperatur homogene und stabile Lösungen mit der Polyolkomponente bilden. Beispiele für geeignete Verbindung en sind Monoethanolamin. Diisopropanolamin, Aminoethylethanolamin, 2-2'-Hydroxyethoxy-ethylamin,oder Hydroxyalkylpiperazin, wobei Aminoethylethanolamin und Hydroxyalkylpiperazin und insbesondere Hydroxyethylpiperazin besonders bevorzugt sind.

Als freie Isocyanatgruppen enthaltende Komponente können beispielsweise Präpolymere von Diphenylmethandiisocyanat (MDI), Toluoldiisocyanaten (TDI), Isophorondiisocyanat (IPDI) und andere handelsübliche, Isocyanatgruppen aufweisende Präpolymere verwendet werden.

Sämtliche Komponenten können mit üblichen Füllstoffen angereichert sein, wobei diese trocken und möglichst inert gegenüber Isocyanaten sein sollten.

Beispiele für geeignete Füllstoffe sind verschiedene Sorten Calciumcarbonat, wobei auch beschichtete Calciumcarbonate in Betracht kommen, Silikate, Kaolin und kolloidale Kieselsäure. Für die mechanische Verarbeitung sollten jedoch abrasive Füllstoffe vermieden werden.

Die erfindungsgemäßen Kleb- und Dichtstoffe können hergestellt werden, indem man aus einer Dosiereinrichtung zunächst die Polyolkomponenten I und II in dem gewünschten Mengenverhältnis miteinander vereinigt. Die Polyolkomponenten I und II können im Verhältnis 0,1 bis 99,9 :9,9 bis 0,1 Gew.% bezogen auf das Gesamtgewicht der Polyolkomponenten miteinander vermischt werden. Gewöhnlich liegt das Verhältnis im Bereich von 10 bis 90 :90 bis 10 und insbesondere von 20 bis 80 :80 bis 20 Gew.%. Anschließend wird das Gemisch in einem solchen Mengenverhältnis mit der freie Isocyanatgruppen enthaltenden Komponente abgemischt, daß das Verhältnis von H-reaktiven Gruppen :Isocyanatgruppen 1 :1 beträgt, wobei der Toleranzbereich bei etwa 10% liegt. Auf diese Weise kann beim Verarbeiten jede Topfzeit zwischen der maximalen Topfzeit der Polyolkomponente I und der minimalen Topfzeit der Komponente II eingestellt werden.

Die Erfindung wird nachfolgend anhand von Beispielen erläutert.

Beispiel

a) Herstellung eines erfindungsgemäß zu verwendenden Sets.

Es wurden die folgenden Komponenten hergestellt :

| Komponente | Zusammensetzung | Menge |
|---|---|---|
| Polyolkomponente I | Polyetherester* | 400 Gew.Teile |
| | Polyester** | 300 Gew.Teile |
| | Rizinusöl*** | 900 Gew.Teile |
| Polyolkomponente II | Polyolanteil wie Komponente I | 1650 Gew.Teile |
| | Hydroxyethyl-piperazin | 65 Gew.Teile |
| Isocyanatkomponente | MDI-Präpolymer | |

\* OHZ = 165, verzweigter Polyalkohol mit Ether- und Estergruppen, Viskosität bei $20^{\circ}$C = 4900 $\pm$ 300 mPa·s

\*\* OHZ = 197 $\pm$5, hydroxylgruppenhaltiges über Epoxidation hergestelltes natürliches Ölderivat, Viskosität bei $20^{\circ}$C = 3000 bis 5000 mPa·s, Jodzahl (Wijs) 12-14

\*\*\* OHZ = 160, Qualität, 1. Pressung

Jeder der Komponenten wurde Calciumcarbonat als Füllstoff in einem Gewichtsverhältnis von etwa 1:1 zugesetzt. Auf diese Weise wurde bei einem konstanten Gewichtsverhältnis der Gesamtpolyolkomponente aus den Komponenten I und II zu der Isocyanatkomponente von 2 :1 jeweils ein Molverhältnis von H-reaktiven Gruppen zu freien Isocyanatgruppen von 1 :1 erhalten.

b) Die Polyolkomponenten I und II gemäß a) wurden jeweils allein und in den in der Tabelle angegebenen Mischungsverhältnissen mit den MDI-Präpolymeren vermischt und die Topfzeiten wie folgt bestimmt:

Jeweils 50 g der fertigen Abmischung wurden bei 20°C in einem Thermostatbad gehalten. Mit einem Rotationsviskosimeter wurde die Viskosität im Abstand von jeweils 10 Minuten überprüft, bis eine Grenzviskosität von 800 Pa.s erreicht war.

Die Ergebnisse sind in Tabelle 1 wiedergegeben:

## Tabelle

| | Mischungsverhältnis der Polyolkomponenten I : II (Gew.Teile) | Mischungsverhältnis der Gesamtpolyolkomponente : Isocyanatkomponente (MDI) (Gew.Teile) | Topfzeit Minuten |
|---|---|---|---|
| | 0 : 1 | 2 : 1 | 20 |
| | 1 : 3 | 2 : 1 | 50 |
| | 1 : 1 | 2 : 1 | 90 |
| | 3 : 1 | 2 : 1 | 120 |
| | 1 : 0 | 2 : 1 | ·170 |

Die graphische Darstellung (Abb.) der Ergebnisse gemäß Tabelle zeigt die lineare Abhängigkeit der Topfzeiten von dem Mischungsverhältnis der Polyolkomponenten I und II.

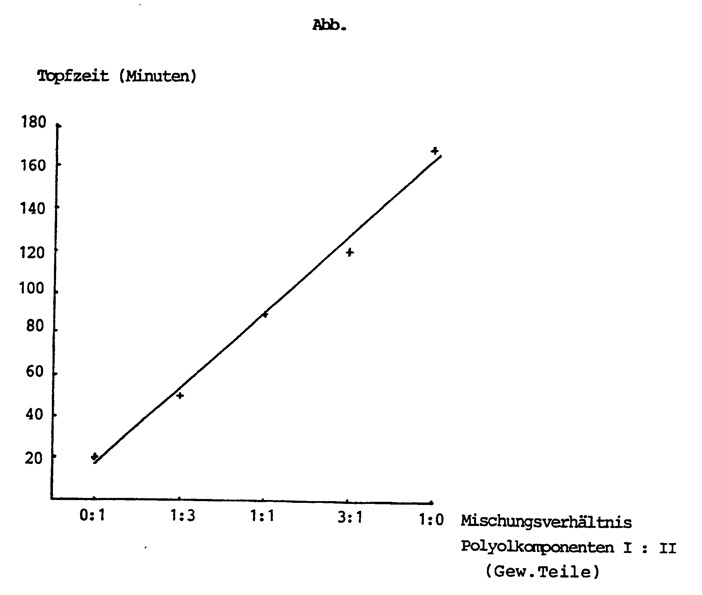

## Ansprüche

1. Verwendung eines Sets aus

a) einer reinen Polyolkomponente I mit einer Topfzeit von 1 bis 8 Stunden,

b) einer Polyolkomponente II mit einer Topfzeit von 1 bis 30 Minuten, die einen Gehalt an Aminohydroxyverbindungen aufweist, und

c) als dritter Komponente einem Vorpolymeren mit freien Isocyanatgruppen

als katalysatorfreie Kleb- und Dichtstoffe mit einstellbarer Topfzeit, idem man zunächst die Polyolkomponenten I und II Abhängigkeit von der gewünschten Topfzeit im Verhältnis 0,1 bis 99,9 : 99,9 bis 0,1 Gew.%, bezogen auf das Gesamtgewicht der Polyolkomponenten I und II, mischt und das Gemisch mit der dritten Komponente in einem Molverhältnis von H-reaktiven Gruppen zu freien Isocyanatgruppen von 1 :1 umsetzt.

2. Verwendung nach Anspruch 1, dadurch gekennzeichnet, daß die Polyolkomponenten I und II jeweils eine Hydroxylzahl von 40 bis 400 aufweisen.

3. Verwendung nach den Ansprüchen 1 oder 2, dadurch gekennzeichnet, daß die Polyolkomponente II Aminohydroxyverbindungen in einer Menge von 1 Amin-Äquivalent : 5 Hydroxyl-Äquivalenten enthält.

4. Verwendung nach den Ansprüchen 1 bis 3, dadurch gekennzeichnet, daß die Aminohydroxyverbindungen Aminoethylethanolamin und/oder Hydroxyethylpiperazin sind.

## Claims

1. The use of a set comprising

a) a pure polyol component I having a pot life of from 1 to 8 hours,

b) a polyol component II containing aminohydroxy compounds which has a pot life of from 1 to 30 minutes and

c) as the third component a prepolymer having freeisocyanate groups as catalyst-free adhesives and sealants having adjustable pot lives

by first mixing the polyol components I and II, depending on the desired pot life, in the ratio of 0.1 to 99.9 : 99.9 to 0.1% by weight, relative to the total weight of the polyol components I and II, and then reacting this mixture with the third component in a molar ratio of reactive hydrogen groups to free isocyanate groups of 1 : 1.

2. The use according to Claim 1, characterized in that the polyol components I and II each have a hydroxyl number of from 40 to 400.

3. The use according to either of Claims 1 or 2, characterized in that the polyol component I I contains aminohydroxy compounds in an amount of 1 amine equivalent : 5 hydroxyl equivalents.

4. The use according to any one of Claims 1 to 3, characterized in that the aminohydroxy compounds are aminoethylethanolamine and/or hydroxyethylpiperazine


## Revendications

1. Utilisation d'un ensemble de

(a) un composant de polyol pur I ayant une vie en pot de 1 à 8 heures,

(b) un composant de polyol II ayant une vie en pot de 1 à 30 minutes, qui présente une certaine teneur en composés aminohydroxy et,

(c) en tant que troisième composant, un prépolymère avec groupes isocyanates libres,

en tant que matières adhésives et de calfatage sans catalyseur avec vie en pot réglable,

par le fait que l'on mélange d'abord les composants de polyol I et II, selon la vie en pot souhaitée, à la proportion de 0,1 à 99,9 : 99,9 à 0,1 % en poids, en se rapportant au poids total des composants de polyol I et II, et on transforme le mélange avec le troisième composant à un rapport en moles des groupes réactifs H aux groupes isocyanates libres de 1 :1.

2. Utilisation selon la revendication 1, caractérisée en ce que les composants de polyol I et II présentent un indice d'hydroxyle de 40 à 400.

3. Utilisation selon les revendications 1 ou 2, caractérisée en ce que le composant de polyol II contient des composés aminohydroxy en une quantité de 1 équivalent amine / 5 équivalents hydroxyles.

4. Utilisation selon les revendications 1 à 3, caractérisée en ce que les composés aminohydroxy sont de l'aminoéthyléthanolamine et/ou de l'hydroxyéthylpipérazine.

Abb.

Topfzeit (Minuten)

Mischungsverhältnis
Polyolkomponenten I : II
(Gew.Teile)